# DEMANDE DE BREVET EUROPEEN

(11) **EP 1 314 608 A1**
(43) Date de publication de la demande: **28.05.2003**
(21) Numéro de dépôt: 02292907.9
(22) Date de dépôt: 22.11.2002
(51) Int. Cl.: B60Q 1/30

(54) **Dispositif de signalisation lumineuse pour une remorque et procédé de mise en place d'un tel dispositif**

(30) Priorité: 23.11.2001 FR 0115199
(71) Demandeur: COLAS, 92653 Boulogne-Billancourt Cédex (FR)
(72) Inventeur: Reygnier, Pascal, 33290 Le Pian (FR)
(74) Mandataire: Michelet, Alain

(57) **Abrégé**

La présente invention concerne un dispositif de signalisation lumineuse pour une remorque, comprenant un ensemble de feux (4) destinés à répéter exactement les feux correspondants d'un véhicule tractant la remorque.

Selon l'invention, le dispositif comprend en outre des moyens de transmission sans câble (8, 9) pour la transmission de signaux de commande actionnant au moins un des feux (4), ainsi qu'une alimentation électrique (10) pour les feux (4) de la remorque et les moyens de transmission (8, 9).

L'invention concerne également un procédé de mise en place d'un dispositif de signalisation lumineuse.

## Description

La présente invention concerne un dispositif de signalisation lumineuse pour une remorque ainsi qu'un procédé de mise en place d'un tel dispositif.

Selon les termes du Code de la Route, les remorques doivent être équipées d'un ensemble de signalisation lumineuse arrière, répétant exactement les feux arrière du véhicule tracteur. Cet ensemble de signalisation lumineuse arrière comprend notamment les feux de stop, les clignotants, des feux de nuit, l'éclairage de la plaque d'immatriculation et le feu de recul. Pour cela, les remorques sont équipées d'un câble muni d'un connecteur se branchant sur une prise adéquate du véhicule tracteur.

Cependant, plusieurs inconvénients apparaissent au quotidien pour les utilisateurs de remorques attelées et dételées fréquemment. D'une part, le connecteur, homologué et standardisé et donc non modifiable, est parfois difficile à installer et présente fréquemment des faux contacts. De plus, il est parfois oublié de brancher le câble, en conséquence de quoi le câble est endommagé et rapidement inutilisable.

D'autre part, de plus en plus d'utilisateurs demandent un procédé automatisé leur évitant de descendre du véhicule tracteur. Il existe aujourd'hui des attelages automatiques permettant d'accrocher une remorque en reculant sans que l'utilisateur ait besoin d'intervenir sur le timon. Cependant, l'utilisateur doit malgré tout descendre pour brancher le câble de signalisation.

Pour éviter au conducteur du véhicule tracteur de descendre du véhicule lorsque la remorque est accrochée moyennant un attelage automatique, certains véhicules, c'est-à-dire certains véhicules tracteurs et certaines remorques, sont équipés de connecteurs à débranchage automatique. Cependant, de tels connecteurs sont très onéreux et, en plus, très fragiles.

Le but de l'invention est de remédier aux inconvénients décrits ci-avant.

Plus particulièrement, le but de l'invention est de proposer une possibilité de s'affranchir complètement du câble de signalisation.

Le but de l'invention est atteint par un dispositif de signalisation lumineuse pour une remorque, comprenant un ensemble de feux destinés à répéter exactement les feux correspondants d'un véhicule tractant la remorque.

Selon l'invention, le dispositif de signalisation lumineuse comprend des moyens de transmission sans câble pour la transmission à distance de signaux de commande actionnant au moins un des feux, ainsi qu'une alimentation électrique pour les feux de la remorque et les moyens de transmission.

L'invention repose donc, de prime abord, sur le principe d'un remplacement de la liaison câblée entre le véhicule tractant et la remorque par une liaison sans câble. Ce remplacement implique cependant une solution accessoire pour la transmission de l'énergie électrique. De même, la solution proposée par l'invention peut s'appliquer comme moyen exclusif ou comme moyen supplémentaire.

Lorsque l'invention est appliquée comme moyen exclusif, les véhicules concernés, c'est-à-dire les véhicules tractant et les véhicules tractés, ne sont reliés l'un à l'autre, sur le plan de la signalisation arrière de la remorque, que par les moyens de liaison sans câble.

Lorsque l'invention est appliquée en tant que moyen supplémentaire, les véhicules concernés sont équipés respectivement avec une prise pour le véhicule tractant et un câble de signalisation pour le véhicule tracté et les moyens de transmission sans câble proposés par l'invention viennent en plus et sont avantageusement formés de façon à être branchés respectivement sur la prise et sur le câble.

Dans cette perspective, l'invention concerne également les caractéristiques ci-après, considérées isolément ou selon toutes leurs combinaisons techniquement possibles :
- les moyens de transmission comprennent un émetteur destiné à être disposé sur le véhicule tractant et à être relié à des commandes par lesquelles sont allumés les feux du véhicule tractant, et un récepteur destiné à être disposé sur la remorque et à être relié aux feux de la remorque ;
- l'émetteur et le récepteur sont conçus pour une liaison unidirectionnelle allant du véhicule tractant vers la remorque ;
- les moyens de transmission comprennent un émetteur et un récepteur radios ;
- les moyens de transmission comprennent un émetteur et un récepteur optoélectroniques ;
- les moyens de transmission comprennent un émetteur et un récepteur hertziens ;
- les moyens de transmission comprennent un émetteur et un récepteur amovibles destinés à être fixés provisoirement au véhicule tractant et à la remorque, et à être reliés respectivement à une prise réglementaire de signalisation du véhicule tractant et à un câble réglementaire de signalisation de la remorque ;
- l'alimentation électrique est intégrée dans les moyens de transmission ;
- l'alimentation électrique et les moyens de transmission sont logés dans des boîtiers communs.

Le but de l'invention est également atteint par un procédé de mise en place d'un dispositif de signalisation lumineuse ayant une ou plusieurs des caractéristiques décrites ci-avant sur une remorque et un véhicule tractant.

Selon l'invention, ce procédé comprend les étapes de :
- monter des moyens de transmission sans câble pour la transmission de signaux de commandes actionnant au moins un des feux de la remorque, ainsi qu'une alimentation électrique pour les feux de la remorque et au moins une partie des moyens de transmission, sur la remorque et le véhicule tractant,
- relier au moins une partie des moyens de transmission à l'alimentation électrique, et
- relier les moyens de transmission, respectivement aux commandes de la signalisation réglementaire du véhicule tractant et aux feux réglementaires de signalisation de la remorque.

Lorsque l'invention est appliquée en tant que moyen supplémentaire, la troisième étape du procédé défini ci-avant consiste à relier les moyens de transmission, respectivement à une prise réglementaire de signalisation du véhicule tractant et à un câble réglementaire de signalisation de la remorque.

D'autres caractéristiques et avantages de l'invention ressortiront de la description d'un mode de réalisation de l'invention en référence aux dessins annexés dans lesquels :
- la figure 1 représente l'attelage d'une remorque derrière un véhicule tracteur et une liaison par câble ;
- les figures 2A à 2E montrent l'attelage d'une remorque derrière un véhicule tracteur avec une liaison sans câble selon l'invention.

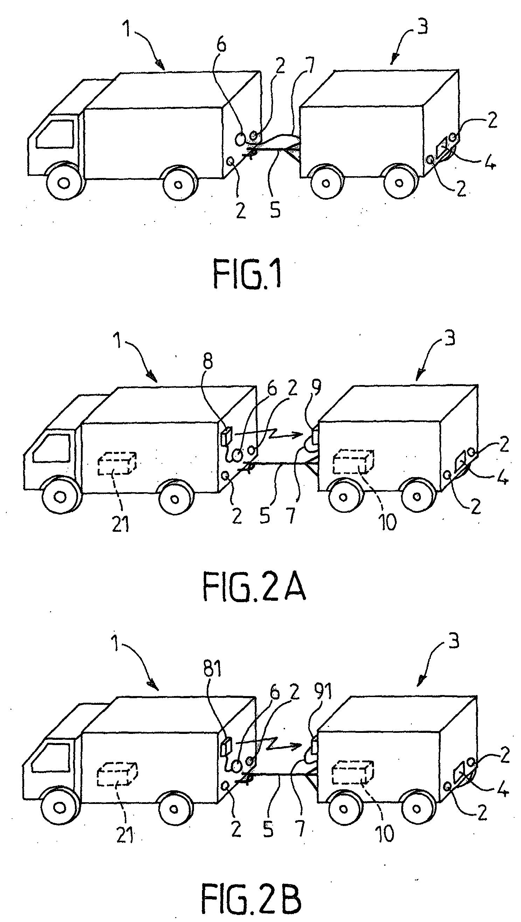

La figure 1 montre un véhicule tracteur 1 équipé de feux arrière réglementaires 2. A ce véhicule tracteur 1, par exemple un camion, est attelée une remorque 3 équipée de feux réglementaires arrière 4. La remorque 3 est attelée au véhicule tracteur 1 au moyen d'un timon 5 débrochable. Les feux 4 de la remorque 3 sont reliés aux commandes des feux arrière 2 du véhicule tracteur 1 moyennant un câble de signalisation 7 pourvu d'un connecteur pour brancher le câble à une prise 6 du véhicule tracteur 1.

Il est précisé que l'invention s'applique également lorsque le véhicule tracteur est une première remorque à laquelle est attelée une seconde remorque.

Les figures 2A à 2E représentent différentes variantes d'un mode de réalisation de l'invention selon lequel les moyens de transmission sans câble du dispositif de signalisation lumineuse de l'invention et l'alimentation électrique et des moyens de transmission sont ajoutés au véhicule tracteur 1 et à la remorque 3 décrits en référence à la figure 1. Ceci signifie plus particulièrement que le véhicule tracteur 1 destiné à être équipé d'un dispositif selon l'invention, est avantageusement équipé d'une prise 6 et que, de même, la remorque 3 est équipée d'un câble de signalisation 7.

Selon le mode de réalisation de l'invention représenté sur la figure 2A, le véhicule tracteur 1 est équipé d'un ensemble de feux de signalisation arrière 2, de moyens de commande 21 pour les feux arrière 2, de la prise 6 réglementaire et d'un émetteur 8. L'alimentation électrique de l'émetteur 8 est assurée par la même source d'énergie électrique que celle alimentant les feux de signalisation 2.

La remorque 3 est équipée d'un ensemble de feux réglementaires arrière 4, d'un timon débrochable 5, d'un câble de signalisation réglementaire 7, d'un récepteur 9 et d'une alimentation électrique 10. Le récepteur 9 et les feux arrière 4 sont reliés électriquement à l'alimentation électrique 10.

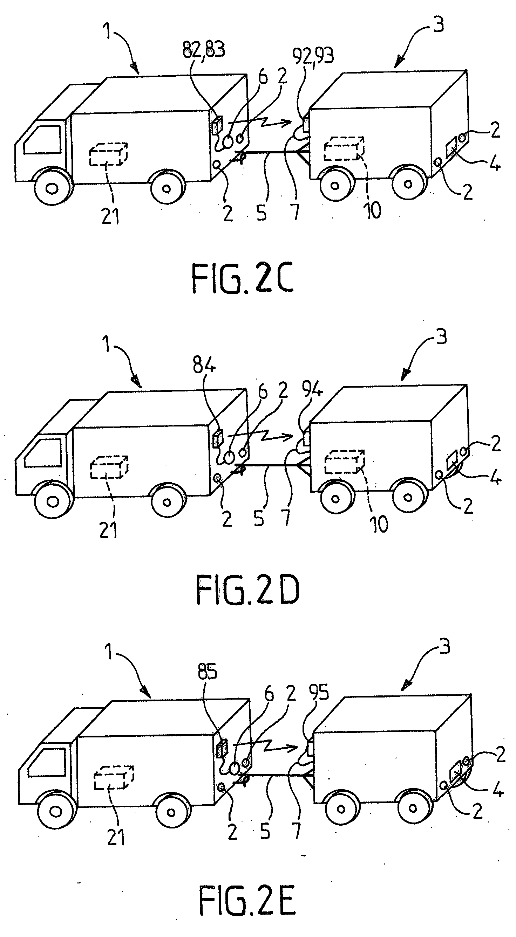

Comme cela est indiqué sur la figure 2B, l'émetteur 8 peut être constitué par un émetteur radio 81 et le récepteur 9 peut être constitué par un récepteur radio 91. Selon des alternatives indiquées sur la figure 2C, l'émetteur 8 peut être constitué soit par un émetteur optoélectronique 82 ou un émetteur hertzien 83, et le récepteur 9 peut être constitué par un récepteur optoélectronique 92 ou par un récepteur hertzien 93, sans que cela ne change le principe de l'invention.

Quel que soit le type de transmission à distance choisi, les moyens de transmission sont réalisés avantageusement sous la forme d'un émetteur 84 et d'un récepteur 94 amovibles, afin qu'ils puissent être fixés provisoirement aux véhicules concernés le temps qu'un attelage et dételage fréquents préconisent le recours au dispositif de l'invention (figure 2D).

Selon ces principes, l'émetteur 84 est pourvu d'un boîtier moyennant lequel il est accroché au véhicule tracteur 1 à un endroit prédéterminé et à partir duquel il peut être relié à la prise 6 moyennant un câble prévu à cet effet solidaire de l'émetteur 84. De manière analogue, le récepteur 94 est logé dans un boîtier destiné à être accroché à la remorque à un endroit prédéterminé, de manière à pouvoir être relié au câble de signalisation 7 de la remorque 3.

L'alimentation électrique 10 dont est équipée la remorque 3, peut être constituée indifféremment d'une batterie rechargeable qui est rechargée pendant les temps de non-utilisation de la remorque, notamment lorsqu'elle est stationnée dans un hangar ou un dépôt. Cette batterie rechargeable peut également être rechargée moyennant un générateur actionné par le déplacement de la remorque ou, par exemple, par un panneau photovoltaïque. Il est cependant également concevable que l'alimentation électrique soit assurée uniquement par des éléments photovoltaïques pour une utilisation de la remorque à la lumière du jour.

Selon une variante de l'invention représentée sur la figure 2E, l'alimentation électrique et les moyens de transmission sont logés dans des boîtiers communs référencés 85 pour l'émetteur et 95 pour le récepteur.

Il est par ailleurs également concevable, sans que cela ne soit décrit ici en détail, que l'alimentation du récepteur 9 et des feux arrière 4 de la remorque soit assurée à partir du véhicule tractant, par exemple par une transmission radioélectrique de l'énergie du véhicule tractant 1 vers le véhicule tracté 3. Une telle liaison est d'autant plus facile à mettre en oeuvre que la distance entre le véhicule tractant et le véhicule tracté est faible et que l'on puisse choisir les feux arrière de façon à ce qu'ils consomment le moins d'énergie électrique possible. Citons, à titre d'exemple, l'utilisation de diodes électroluminescentes.

Lorsqu'un dispositif de signalisation lumineuse selon l'invention est mis en place sur des véhicules tels que le véhicule tracteur 1 et la remorque 3 représentés sur la figure 1, on monte d'abord les moyens de transmission sans câble 8, 9, respectivement à l'arrière du véhicule tracteur 1 et à l'avant de la remorque 3. Ensuite, l'émetteur 8 est branché sur la prise 6 du véhicule tracteur 1 pour recevoir des signaux de commande en provenance des moyens de commande 21 commandant l'ensemble des feux de signalisation arrière 2 du véhicule tracteur 1.

De manière correspondante, le récepteur 9 reçoit le câble 7 de la remorque 3 moyennant une prise prévue à cet effet et dans laquelle est enfiché le connecteur du câble 7.

L'utilisation du dispositif de signalisation lumineuse de l'invention en tant que moyen supplémentaire et non pas en tant que moyen exclusif, pour faire répéter l'ensemble des signalisations lumineuses arrière 4 de la remorque 3, exactement les feux arrière 2 du véhicule tracteur 1, a pour avantage de conserver aussi bien au véhicule tracteur 1 qu'à la remorque 3, la possibilité de pouvoir être mis ensemble avec un véhicule (tractant ou tracté) non équipé du dispositif de l'invention, sans qu'un changement d'équipement soit nécessaire à chaque changement d'attelage. Ceci semble particulièrement intéressant dans des applications de chantier routier mobile.

Par ailleurs, le coût d'une radio unidirectionnelle de faible portée, par exemple de l'ordre de 10 m, est nettement inférieur à celui d'un connecteur à débrochage automatique. En ce qui concerne les variantes d'utilisation d'une liaison infrarouge ou autrement optoélectronique, ou une liaison hertzienne, même si celles-ci devaient être plus onéreuses qu'une liaison radio unidirectionnelle, il n'en reste pas moins que ces solutions sont moins fragiles que les connecteurs à débrochage automatique utilisés jusqu'à maintenant.

## Revendications

1. Dispositif de signalisation lumineuse pour une remorque comprenant un ensemble de feux de signalisation (4) destinés à répéter exactement les feux correspondants d'un véhicule tractant la remorque, le dispositif comprenant, outre les feux de signalisation (4), des moyens de transmission sans câble (8, 9) pour la transmission du véhicule tractant vers la remorque, de signaux de commande actionnant au moins un des feux (4), ainsi qu'une alimentation électrique (10) pour les feux (4) de la remorque et les moyens de transmission (8, 9), les moyens de transmission (8, 9) comprenant un émetteur (8) destiné à être disposé sur le véhicule tractant et à être relié à des commandes (21) par lesquelles sont allumés les feux du véhicule tractant, et un récepteur (9) destiné à être disposé sur la remorque, **caractérisé en ce que** le récepteur (9) est relié aux feux (4) de la remorque et **en ce que** l'émetteur (8) et le récepteur (9) sont conçus de façon à être reliés respectivement à une prise réglementaire de signalisation du véhicule tractant et un câble réglementaire de signalisation de la remorque.

2. Dispositif selon l'une quelconque des revendications précédentes, **caractérisé en ce que** les moyens de transmission (8, 9) comprennent un émetteur (81) et un récepteur (91) radios.

3. Dispositif selon l'une quelconque des revendications 1 à 3, **caractérisé en ce que** les moyens de transmission (8, 9) comprennent un émetteur (82) et un récepteur (92) optoélectroniques.

4. Dispositif selon l'une quelconque des revendications 1 à 3, **caractérisé en ce que** les moyens de transmission (8, 9) comprennent un émetteur (83) et un récepteur (93) hertziens.

5. Dispositif selon l'une quelconque des revendications 1 à 4, **caractérisé en ce que** l'émetteur (84) et le récepteur (94) sont amovibles et destinés à être fixé provisoirement au véhicule tractant et à la remorque.

6. Dispositif selon l'une quelconque des revendications précédentes, **caractérisé en ce que** l'alimentation électrique (10) est intégrée dans les moyens de transmission (8, 9).

7. Procédé de mise en place d'un dispositif de signalisation lumineuse selon l'une quelconque des revendications 1 à 6 sur une remorque et un véhicule tractant comprenant les étapes de
- monter des moyens de transmission sans câble (8, 9) pour la transmission de signaux de commandes actionnant au moins un des feux (4) de la remorque, ainsi qu'une alimentation électrique (10) pour les feux (4) de la remorque et au moins une partie des moyens de transmission (8, 9), sur la remorque et le véhicule tractant, et
- relier au moins une partie des moyens de transmission (8, 9) à l'alimentation électrique (10),
**caractérisé par** l'étape de relier les moyens de transmission (8, 9), respectivement aux commandes de la signalisation réglementaire du véhicule tractant et aux feux réglementaires de signalisation de la remorque.
